# EUROPEAN PATENT APPLICATION

(11) **EP 4 474 066 A1**
(43) Date of publication of application: **11.12.2024**
(21) Application number: 24174219.6
(22) Date of filing: 03.05.2024
(51) Int. Cl.: B08B 3/02, B05B 9/01, H01M 50/296

(54) **CLEANING WATER GUN WITH A STARTING POWER SUPPLY**

(30) Priority: 12.04.2024 CN 202410441196
(71) Applicant: Shenzhen Jieqi Technology Innovation Co., Ltd., Shenzhen Guangdong 518129 (CN)
(72) Inventor: Wu, Zhipeng, Shenzhen, 518100 (CN)
(74) Representative: Plavsa, Olga

(57) **Abstract**

A cleaning water gun with a starting power supply includes a housing (1); a water pump (2) fixedly set in the housing (1), and the water pump is fixedly provided with an outlet pipe (201) and an inlet pipe (202); and a mounting cylinder (4) set on the housing (1). Herein the mounting cylinder (4) is fixedly provided with a battery pack inside and the water pump (2) is electrically connected to the battery pack, one end of the mounting cylinder (4) is fixedly provided with a connecting interface (403) and the connecting interface (403) is electrically connected to the battery pack.

## Description

### TECHNICAL FIELD

The present application relates to the technical field of cleaning water guns, and in particular to a cleaning water gun with a starting power supply.

### BACKGROUND

Starting power supply usually has a built-in rechargeable battery, which can store electrical energy and provide power needed to start a car. When a car battery is insufficient or unable to start, a user may use the starting power supply to connect to the car battery and start an engine through the power provided by the starting power supply, which is convenient and quick to use. A cleaning water gun is a tool used for cleaning and rinsing, which usually used for car washing, cleaning the yard, cleaning windows and other occasions. For car lovers, the cleaning water gun greatly facilitates them to clean their own vehicles, thus it is a regular cleaning tools.

Although emergence of emergency starting power supply, car vacuum cleaner and other tools have provided convenience for car owners, when the car owners washes their car in the field, existing cleaning water gun needs to be connected to the power supply in the car, in this case a car door is in an open state, a water flow is therefore easy to enter the car, which is more inconvenient to use. Moreover, a car starting power supply and the cleaning water gun are designed separately, resulting in its occupying a large space, it is inconvenient storage and not convenient enough to use, and thus does not meet consumer's requirements for use.

### SUMMARY

The present disclosure aims to provide a cleaning water gun with a starting power supply to address problems that in existing technologies the cleaning water gun and the starting power supply are inconvenient to use, and also occupy a large space, affecting usage experiences.

To achieve above objectives, the present disclosure adopts following technical solutions. In some embodiments of the present disclosure, a cleaning water gun with a starting power supply is provided, including a housing; a water pump fixedly set in the housing, and the water pump is fixedly provided with an outlet pipe and an inlet pipe; and a mounting cylinder set on the housing. Herein the mounting cylinder is fixedly provided with a battery pack inside and the water pump is electrically connected to the battery pack, one end of the mounting cylinder is fixedly provided with a connecting interface and the connecting interface is electrically connected to the battery pack.

To improve a protection effect of the water pump, preferably, the housing is fixedly provided with a protective cylinder at one end, the water pump is fixedly disposed in the protective cylinder, and the protective cylinder is fixedly provided with a baffle at one end away from the housing.

To improve an effect of car washing, preferably, the cleaning water gun with a starting power supply further includes an extension pipe and the extension pipe is fixedly provided with a connecting head at one end, the connecting head is threaded with the outlet pipe, and the extension pipe is rotationally provided with an adjustable nozzle at the other end.

To facilitate adjustment of a pumping capacity of the water pump, preferably, the housing is rotatably provided with a knob for adjusting a water pressure level of the water pump at the other end.

Preferably, the housing is fixedly provided with an adjustable cylinder and the adjustable cylinder is fixedly provided with a first button inside, and the first button is electrically connected to the water pump.

Preferably, the mounting cylinder is opened with a connecting hole at the other end, the adjustable cylinder is fixedly provided with a connecting column and the connecting column is slidably connected into the connecting hole, the connecting column is fixedly provided with a plurality of fixture blocks on a circumference thereon, and an inner wall of the connecting hole is provided with slots connected with the fixture blocks.

Preferably, the connecting column is fixedly provided with a binding post electrically connected to the water pump, and a plug hole electrically connected to the battery pack is provided at a bottom inside the connecting hole, and the binding post is slidably connected into the plug hole.

Preferably, the mounting cylinder is opened with a protective compartment at the other end and the connecting interface is fixedly disposed in the protective compartment, a protective cover is provided on the protective compartment and the protective cover is fixedly provided with a rotary base at one end and the rotary base is rotationally connected with the protective compartment, the protective cover is slidably provided with a card board at the other end, and an inner wall of the protective compartment is provided with a groove that snap-connected to the card board.

Compared with the existing technologies, the cleaning water gun with a starting power supply provided by the present disclosure has at least following beneficial effects and advantages.
1. The cleaning water gun with a starting power supply of the present disclosure, by fixedly setting the water pump in the housing and setting the mounting cylinder on the housing, and also fixedly setting the battery pack in the mounting cylinder, on the one hand, it has both functions of washing cars and starting power supply at the same time, and also has a compact and small structure, which is easy to store and carry, thereby improving the convenience of using. On the other hand, when washing the cars in the field, the battery pack can supply power for the water pump, thereby improving the effect of car washing.
2. The cleaning water gun with a starting power supply of the present disclosure, by threading the extension pipe on the outlet pipe, it is easy to assembly and disassembly the extension pipe, and thus improving the storage effect. Moreover, by fixedly setting the adjustable nozzle on the extension pipe, it is convenient to choose different liquid discharge mode, thereby improving the effect of car washing.

Other parts not involved in the cleaning water gun with a starting power supply of the present disclosure are the same as the existing technologies, or can be realized by using the existing technologies. In the present disclosure, by fixedly setting the water pump in the housing and setting the mounting cylinder on the housing, and also fixedly setting the battery pack in the mounting cylinder, on the one hand, it has both functions of washing cars and starting power supply at the same time, and also has a compact and small structure, which is easy to store and carry, thereby improving the convenience of using. On the other hand, when washing the cars in the field, the battery pack can supply power for the water pump, thereby improving the effect of car washing.

### BRIEF DESCRIPTION OF THE DRAWINGS

FIG. 1 shows a structural schematic diagram of a cleaning water gun with a starting power supply in accordance with some embodiments of the present disclosure.
FIG. 2 shows another structural schematic diagram of the cleaning water gun with a starting power supply in accordance with some embodiments of the present disclosure.
FIG. 3 shows still another structural schematic diagram of the cleaning water gun with a starting power supply in accordance with some embodiments of the present disclosure.
FIG. 4 shows a structural schematic diagram of a protective cover of the cleaning water gun with a starting power supply in accordance with some embodiments of the present disclosure.
FIG. 5 shows a structural schematic diagram of a water pump of the cleaning water gun with a starting power supply in accordance with some embodiments of the present disclosure.
FIG. 6 shows a structural schematic diagram of a connecting head of the cleaning water gun with a starting power supply in accordance with some embodiments of the present disclosure.
FIG. 7 shows a structural schematic diagram of a connecting column of the cleaning water gun with a starting power supply in accordance with some embodiments of the present disclosure.

In the drawings, reference signs are as follows. 1. Housing, 101. Protective cylinder, 102. Adjustable cylinder, 103. Connecting column, 104. Fixture block, 105. Binding post, 106. Baffle, 2. Water pump, 201. Outlet pipe, 202. Inlet pipe, 203. First button, 204. Knob, 3. Extension pipe, 301. Adjustable nozzle, 302. Connecting head, 4. Mounting cylinder, 401. Connecting hole, 402. Protective compartment, 403. Connecting interface, 404. Second button, 5. Protective cover, 501. Limit groove, 502. Rotary base, 6. Card board, 601. Limit plate.

### DETAILED DESCRIPTION OF THE EMBODIMENTS

The technical solutions in embodiments of the present disclosure will be clearly and completely described below in conjunction with accompanying drawings in the embodiments of the present disclosure. Obviously, described embodiments are only a part of the embodiments of the present disclosure and not all of the embodiments of the present disclosure.

In the description of the present disclosure, it should be understood that terms "up", "down", "front", "back", "left", "right", "top", "bottom", "inside", "outside", and the like indicating orientation or positional relationships are based on those shown in the accompanying drawings, and are intended only for the purpose of facilitating the description of the present disclosure and simplifying the description, and are not intended to indicate or imply that a device or an element referred to must have a particular orientation, be constructed and operated in a particular orientation, and therefore is not to be construed as a limitation of the present invention.

### Embodiments

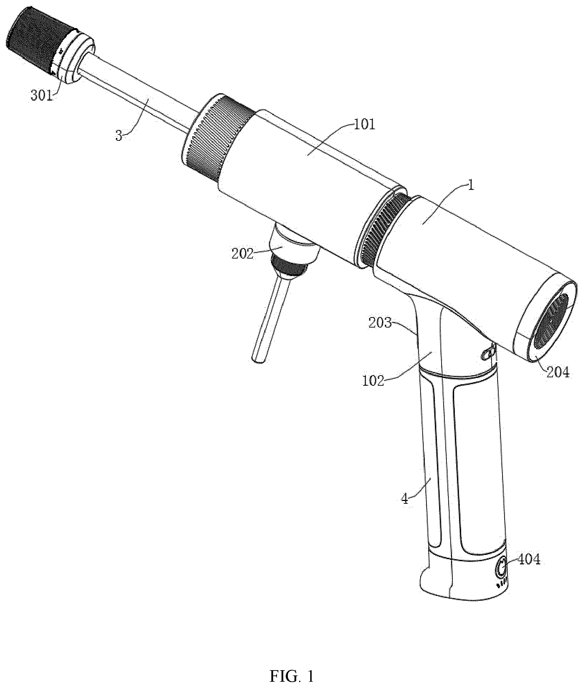

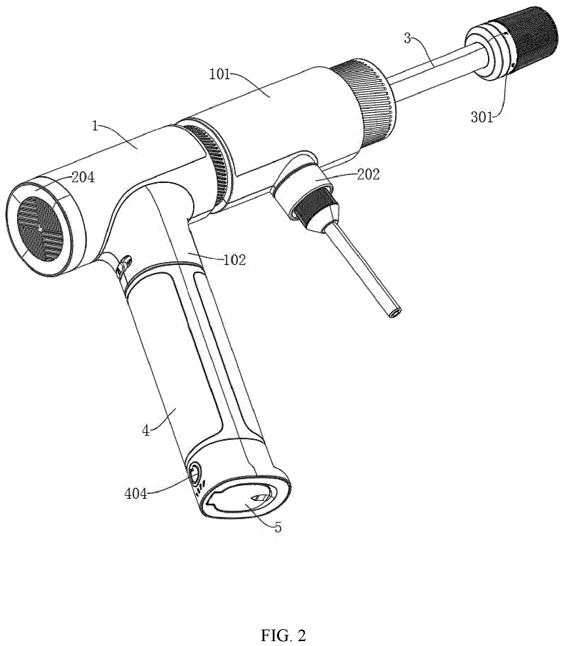

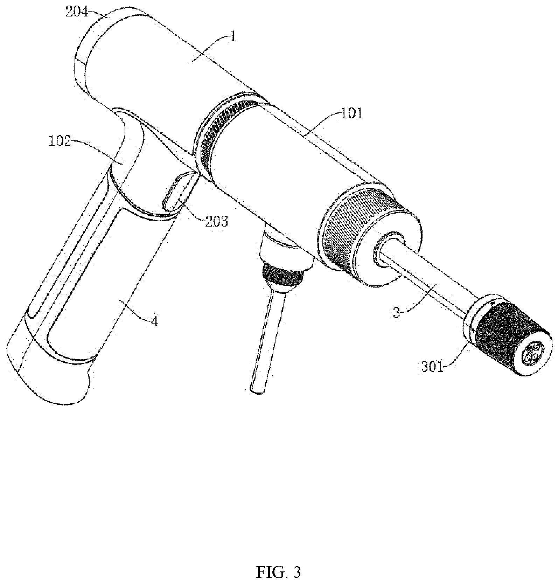

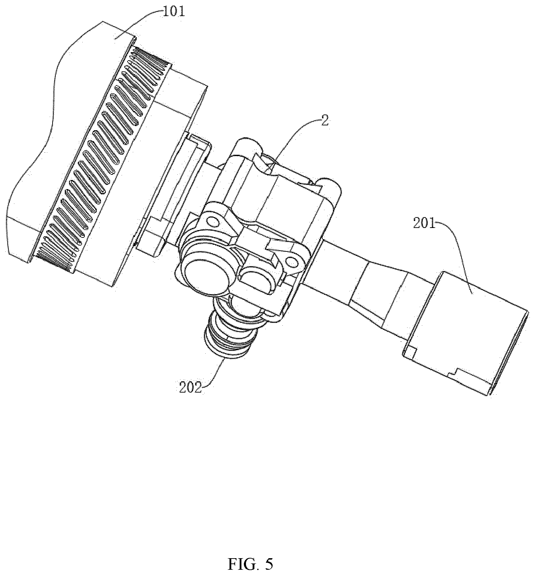

Referring to FIG. 1 to FIG. 7, in some embodiments of the present disclosure, a cleaning water gun with a starting power supply is provided, including a housing 1; a water pump 2 fixedly set in the housing 1, and the water pump 2 is fixedly provided with an outlet pipe 201 and an inlet pipe 202, the inlet pipe 202 is slidingly provided with a filter screen, which can reduce silts in water entering into the water pump 2, resulting in the water pump 2 not being able to be used normally; and a mounting cylinder 4 set on the housing 1. Herein the mounting cylinder 4 is fixedly provided with a battery pack inside, and the battery pack is rechargeable batteries. The water pump 2 is electrically connected to the battery pack, and one end of the mounting cylinder 4 is fixedly provided with a connecting interface 403, and the connecting interface 403 includes a charging interface for charging the battery pack, a lap interface for charging cars, and a USB interface, and so on, the connecting interface 403 is electrically connected to the battery pack. Furthermore, the mounting cylinder 4 is fixedly provided with a second button 404 inside for controlling on-off of the battery pack, and an indicator light is fixedly provided on the mounting cylinder 4 for displaying an electric quantity of the battery pack. When in use, by using the battery pack to supply power to the water pump 2, it is convenient for an owner to clean his/her car. Moreover, by fixedly setting the connecting interface 403 on the mounting cylinder 4 that electrically connected to the battery pack, by such designs, it can be used as a starting power supply to improve usage effect.

When in use, by fixedly setting the water pump 2 in the housing 1, setting the mounting cylinder 4 on the housing 1, and also fixedly setting the battery pack in the mounting cylinder 4, on the one hand, it has both functions of washing car and starting power supply at the same time, and its structure is compact and small, which is easy to store and carry, thereby improving convenience of using. On the other hand, when washing the cars in the field, the battery pack can supply power to the water pump 2, thereby improving the effect of car washing. Moreover, by threading the extension pipe 3 on the outlet pipe 201, it is easy to assembly and disassembly the extension pipe 3, and thus improving the storage effect. And by fixedly setting the adjustable nozzle 301 on the extension pipe 3, it is convenient to choose different liquid discharge mode, thereby improving the effect of car washing.

Referring to FIG. 1, FIG. 2, FIG. 3, and FIG. 5, the housing 1 is fixedly provided with a protective cylinder 101 at one end, the water pump 2 is fixedly disposed in the protective cylinder 101, and the protective cylinder 101 is fixedly provided with a baffle 106 at one end away from the housing 1. When in use, by fixedly setting the water pump 2 in the protective cylinder 101, it can improve a protective effect of the water pump 2 and also avoid a water flow splashing onto the water pump 2 during washing the car, thus affects a service life of the water pump 2.

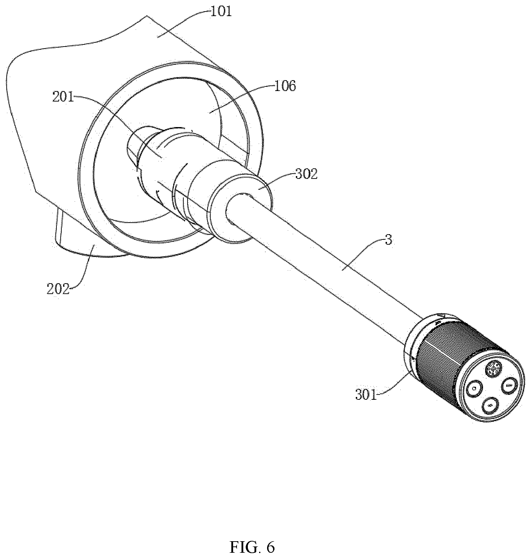

Referring to FIG. 6, the cleaning water gun with a starting power supply further includes an extension pipe 3. Herein the extension pipe 3 is fixedly provided with a connecting head 302 at one end, the connecting head 302 is threaded with the outlet pipe 201, and the extension pipe 3 is rotationally provided with an adjustable nozzle 301 at the other end. The adjustable nozzle 301 is known in existing technologies, a protective cover is inserted at the protective cylinder 101, and the connecting head 302 is located in the protective cover, which can improve the protective effect and also improve aesthetic. When in use, by threading the extension pipe 3 with the outlet pipe 201, it is convenient to assemble and disassemble the extension pipe 3 and reduce the occupied space. And by rotationally setting the adjustable nozzle 301 on the extension pipe 3, it is convenient to adjust different liquid discharge mode, thereby improving the effect of car washing.

Referring to FIG. 1 to FIG. 3, the housing 1 is rotatably provided with a knob 204 for adjusting a water pressure level of the water pump 2 at the other end. When in use, by turning the knob 204, it can adjust an amount of pumping power of the water pump 2, which in turn changes the water pressure and thereby improving the effect of car washing.

Referring to FIG. 1 to FIG. 3, the housing 1 is fixedly provided with an adjustable cylinder 102 and the adjustable cylinder 102 is fixedly provided with a first button 203 inside, and the first button 203 is electrically connected to the water pump 2. When in use, by pressing the first button 203, it is easy to start up and shot down the water pump 2, thereby improving the usage effect.

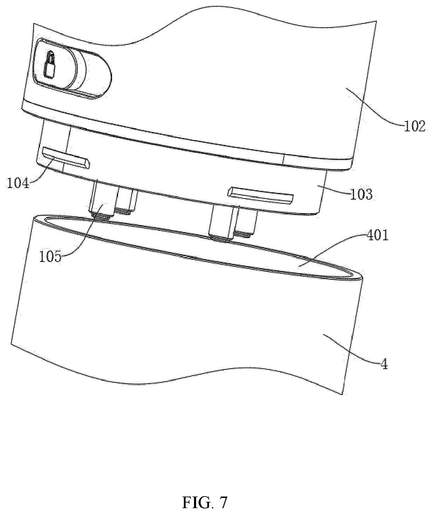

Referring to FIG. 7, the mounting cylinder 4 is opened with a connecting hole 401 at the other end, the adjustable cylinder 102 is fixedly provided with a connecting column 103 and the connecting column 103 is slidably connected into the connecting hole 401. The connecting column 103 is fixedly provided with a plurality of fixture blocks 104 on a circumference thereon, the fixture blocks 104 is provided with two to six groups, preferably three groups, and the three groups of fixture blocks 104 are evenly distributed along the circumference of the connecting column 103, and an inner wall of the connecting hole 401 is provided with slots connected with the fixture blocks 104, the slots are provided with three groups accordingly. When in use, the fixture blocks 104 correspond to the slots one by one, and then the connecting column 103 is inserted into the connecting hole 401 until the fixture blocks 104 are clamped with the slots, the mounting cylinder 4 is therefore fixed on the adjustable cylinder 102. And a lock switch is slidably provided on the adjustable cylinder 102, when can prevent the mounting cylinder 4 from falling off the adjustable cylinder 102 during normal use, affecting the normal use. Furthermore, a sealing ring is fixedly provided on the inner wall of the connecting hole 401, and an end face of the sealing ring away from the connecting column 103 is set against the circumference of the connecting column 103, which can improve the sealing effect and avoid the water flow entering into the connecting hole 401, affecting the safety of use.

Referring to FIG. 7, the connecting column 103 is fixedly provided with a binding post 105 electrically connected to the water pump 2, and a plug hole electrically connected to the battery pack is provided at a bottom inside the connecting hole 401, and the binding post 105 is slidably connected into the plug hole. When in use, by fixedly setting the binding post 105 on the connecting column 103 and opening the plug hole in the connecting hole 401, and also by connecting the binding post 105 and plug hole through plug-in, it is convenient for the battery pack to supply power to the water pump 2, thereby improving usage effect.

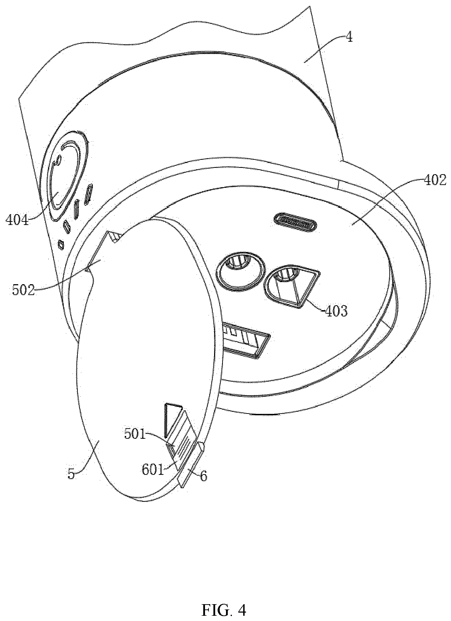

Referring to FIG. 4, the mounting cylinder 4 is opened with a protective compartment 402 at the other end and the connecting interface 403 is fixedly disposed in the protective compartment 402. The protective cover 5 is provided on the protective compartment 402 and the protective cover 5 is fixedly provided with a rotary base 502 at one end and the rotary base 502 is rotationally connected with the protective compartment 402. The protective cover 5 is slidably provided with a card board 6 at the other end, and the protective cover 5 is opened with a limit groove 501 at the other end, the limit groove 501 is slidably provided with a limit plate 601. One end of the card board 6 that extending into the limit groove 501 is fixedly connected with the limit plate 601, and the limit groove 501 is provided with a spring inside, both ends of the spring each is against the limit groove 501 and the limit plate 601. And an inner wall of the protective compartment 402 is provided with a groove that is snap-connected to the card board 6. When in use, by fixedly setting the connecting interface 403 in the protective compartment 402, which can reduce dust or water flow splashing into the connecting interface 403 during washing the car, affecting the safety in use. Moreover, by rotationally providing the protective cover 5 on the protective compartment 402, which can improve the protective effect.

The foregoing description is only some better specific implementations of the present disclosure, but the scope of protection of the present disclosure is not limited thereto, any skilled person in the art familiar with the technical field within the technical scope of the present disclosure, by making equivalent substitutions or changes in accordance with the technical solution and concept of the present disclosure, shall be covered by the scope of protection of the present invention.

## Claims

1. A cleaning water gun with a starting power supply, comprising:
a housing (1);
**characterized in that**, further comprises a water pump (2) fixedly set in the housing (1), and the water pump (2) is fixedly provided with an outlet pipe (201) and an inlet pipe (202); and
a mounting cylinder (4) set on the housing (1);
wherein the mounting cylinder (4) is fixedly provided with a battery pack inside and the water pump (2) is electrically connected to the battery pack, one end of the mounting cylinder (4) is fixedly provided with a connecting interface (403) and the connecting interface (403) is electrically connected to the battery pack.

2. The cleaning water gun with a starting power supply according to claim 1, **characterized in that**, the housing (1) is fixedly provided with a protective cylinder (101) at one end, the water pump (2) is fixedly disposed in the protective cylinder (101), and the protective cylinder (101) is fixedly provided with a baffle (106) at one end away from the housing (1).

3. The cleaning water gun with a starting power supply according to claim 1, **characterized in that**, further comprises an extension pipe (3), the extension pipe (3) is fixedly provided with a connecting head (302) at one end, the connecting head (302) is threaded with the outlet pipe (201), and the extension pipe (3) is rotationally provided with an adjustable nozzle (301) at the other end.

4. The cleaning water gun with a starting power supply according to claim 1, **characterized in that**, the housing (1) is rotatably provided with a knob (204) for adjusting a water pressure level of the water pump (2) at the other end.

5. The cleaning water gun with a starting power supply according to claim 1, **characterized in that**, the housing (1) is fixedly provided with an adjustable cylinder (102) and the adjustable cylinder (102) is fixedly provided with a first button (203) inside, and the first button (203) is electrically connected to the water pump (2).

6. The cleaning water gun with a starting power supply according to claim 5, **characterized in that**, the mounting cylinder (4) is opened with a connecting hole (401) at the other end, the adjustable cylinder (102) is fixedly provided with a connecting column (103) and the connecting column (103) is slidably connected into the connecting hole (401), the connecting column (103) is fixedly provided with a plurality of fixture blocks (104) on a circumference thereon, and an inner wall of the connecting hole (401) is provided with slots connected with the fixture blocks (104).

7. The cleaning water gun with a starting power supply according to claim 6, **characterized in that**, the connecting column (103) is fixedly provided with a binding post (105) electrically connected to the water pump (2), and a plug hole electrically connected to the battery pack is provided at a bottom inside the connecting hole (401), and the binding post (105) is slidably connected into the plug hole.

8. The cleaning water gun with a starting power supply according to claim 1, **characterized in that**, the mounting cylinder (4) is opened with a protective compartment (402) at the other end and the connecting interface (403) is fixedly disposed in the protective compartment (402), a protective cover (5) is provided on the protective compartment (402) and the protective cover (5) is fixedly provided with a rotary base (502) at one end and the rotary base (502) is rotationally connected with the protective compartment (402), the protective cover (5) is slidably provided with a card board (6) at the other end, and an inner wall of the protective compartment (402) is provided with a groove that is snap-connected to the card board (6).
